# EUROPEAN PATENT APPLICATION

(11) **EP 1 542 066 A1**
(43) Date of publication of application: **15.06.2005**
(21) Application number: 03797698.2
(22) Date of filing: 19.09.2003
(51) Int. Cl.: G02F 1/1345, G02F 1/1333, H04M 1/02, H04M 1/00

(54) **LIQUID CRYSTAL DISPLAY DEVICE, AND PORTABLE TELEPHONE DEVICE USING LIQUID CRYSTAL DISPLAY DEVICE**

(30) Priority: 20.09.2002 JP 2002274553
(71) Applicant: MATSUSHITA ELECTRIC INDUSTRIAL CO., LTD., Kadoma-shi, Osaka 571-8501 (JP)
(72) Inventor: MIYASHITA, Akihiro, Kawasaki-shi, Kanagawa 211-0064 (JP); HAKAMATA, Koji, Hamakita-shi, Shizuoka 434-0035 (JP); MURAMATSU, Fumihiro, Hamamatsu-shi, Shizuoka 431-3114 (JP); KAWABATA, Yoshimasa, Miura-shi, Kanagawa 238-0101 (JP); NAKANISHI, Kiyoshi, Kawasaki-shi, Kanagawa 211-0053 (JP); TSUMURA, Toshiyuki, Yokohama-shi, Kanagawa 246-0035 (JP)
(74) Representative: Pautex Schneider, Nicole
(86) International application number: PCT/JP2003/011998
(87) International publication number: WO 2004/027504

(57) **Abstract**

In a fold-up type of portable telephone device, the casing to be opened/closed has liquid crystal display devices on its front and back sides, which causes occurrence of noise. In view of this, in the liquid crystal display device of a portable telephone device, a flexible connection substrate 3 is used to integrally form first 1 and second 2 liquid crystal display parts with a driver circuit 4 shared therebetween. The first liquid crystal display part 1 is connected to the flexible connection substrate 3 to which the second liquid crystal display part 2 is connected. The second liquid crystal display device 2 is formed by adding the flexible connection substrate 3 to the first liquid crystal display part 1, and both are driven by the driver circuit 4. Not only an alternative display but also simultaneous displays can be selectively performed.

## Description

### FIELD OF THE INVENTION

The present invention relates to a liquid crystal display device to be used for a portable telephone device such as a fold-up type of portable telephone device having a plurality of liquid crystal display parts and the like, and a portable telephone device using the liquid crystal display device.

### BACKGROUND OF THE INVENTION

In a conventional fold-up type of portable telephone device, for example, as described in JP-A-2001-136251, there is known a portable telephone device equipped with a first liquid crystal display device which is seen by an operator at a state that a casing is opened and a second liquid crystal display device which is seen by an operator at a state that a casing is closed.

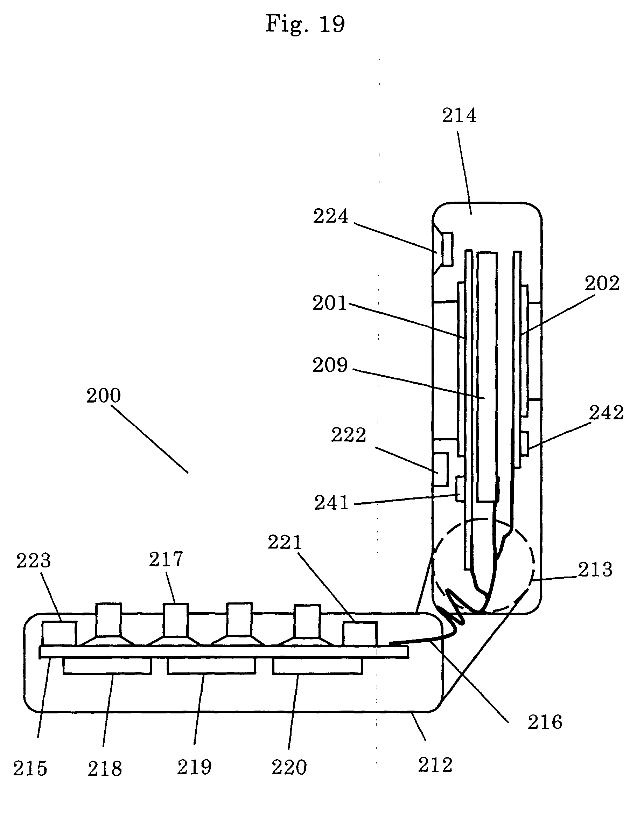

A schematic sectional view of a conventional fold-up type of portable telephone device 200 is illustrated in Fig. 19. In the fold-up type of portable telephone device 200, a second casing 214 is supported by a hinge 213 in front of an arm extended from a first casing 212 so that it can be freely opened and closed. On the second casing 214, there are formed a first liquid crystal display device 201 which is seen by an operator when the second casing 214 is opened and a second liquid crystal display device 202 which is seen by an operator when the second casing 214 is closed such that each of display screens is seen from outside. The first liquid crystal display device 201 has a back light 209 on its back side for realizing a bright display screen by irradiation with a light from the back side using an all-transmissive liquid crystal display device. The second liquid crystal display device 202 is arranged such that the displayed contents are seen without the back light by irradiation with an external light using a semi-transmissive liquid crystal display device.

The first liquid crystal display device 201 and the second liquid crystal display device 202 are respective independent liquid crystal display devices and are driven by respective driver circuits 241 and 242. The first liquid crystal display device 201, the second liquid crystal display device 202 and the back light 209 are connected to a flexible control substrate 216 respectively in which its front end is branched. The other end of the flexible control substrate 216 is connected to a main substrate 215 in the first casing 212.

There are mounted on the second casing 214 a magnet 222 for open/close detection and a speaker 224. Though not illustrated, the speaker 224 is connected to the aforementioned flexible control substrate 216 and outputs a voice of a calling party received by a wireless part 220 of the main substrate 215.

The main substrate 215 of a portable telephone device is installed inside the first casing 212. There are mounted on the main substrate 215 a control part 218, a memory 219, each circuit of the wireless part 220, a key operation part 217, a microphone 223, and an open/close detector 221, thus realizing the radio communication function as a portable telephone device.

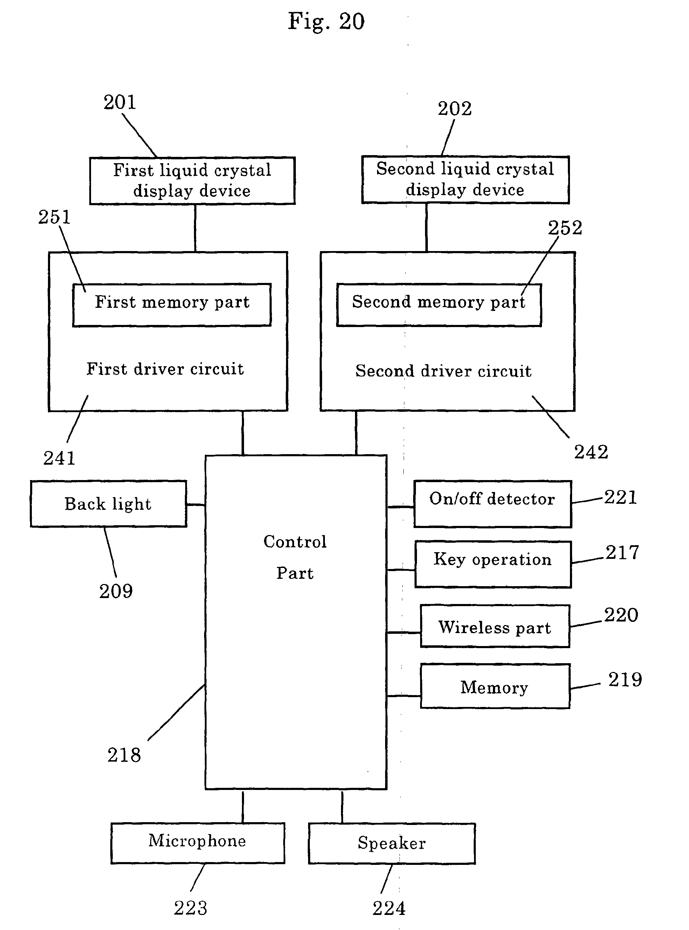

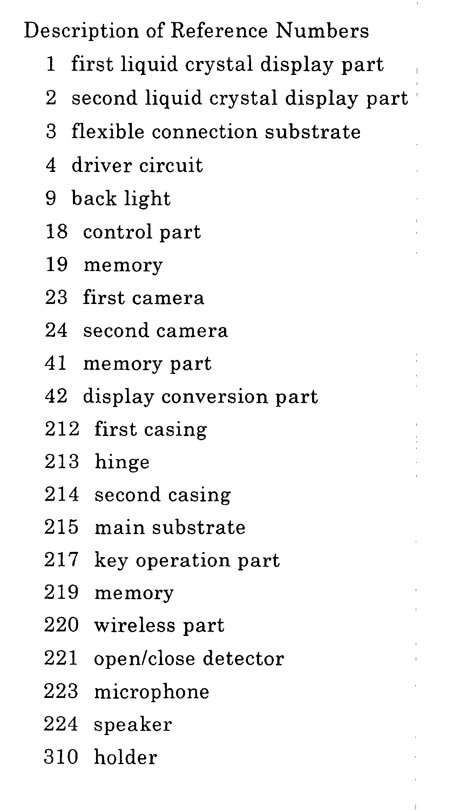

Fig. 20 illustrates a schematic block diagram of the conventional fold-up type of portable telephone device 200. In Fig. 20, the first driver circuit 241 and the second driver circuit 242 are connected to the control part 218. The first liquid crystal display device 201 and the second liquid crystal display device 202 are connected to the first driver circuit 241 and the second driver circuit 242 respectively. A first memory part 251 and a second memory part 252 for temporarily storing image information to be displayed are installed on the first driver circuit 241 and the second driver circuit 242 respectively. Furthermore, the memory 219 in which image information is stored, the back light 209 for the first liquid crystal display device 201 of an all-transmissive liquid crystal display device, the wireless part 220 for radio communications, the microphone 223 for transmitting, the speaker 224 for receiving a call, the key operation part 217 and the open/close detector 221 are connected to the control part 218.

The display operation of the conventional portable telephone device 200 is described below. For example, when a waiting screen is displayed, the control part 218 checks the status of the second casing 214 whether it is opened or closed from the open/close detector 221. When the second casing 214 is closed, the control part 218 reads out image information for the waiting screen from the memory 219, stores such information on the second memory part 252 of the second driver circuit 242 and displays the waiting screen on the second liquid crystal display device 202. At this time, the control part 218 may not send image information to the first memory part 251 of the first driver circuit 241 for the first liquid crystal display device 201.

Then, when the open/close detector 221 detects that the second casing 214 is opened, the control part 218 turns off the power of the second liquid crystal display device 202 and instead turns on the power of the first liquid crystal display device 201 for reading out image information to be displayed on the first liquid crystal display device 201 from the memory 219 and storing it on the first memory part 251 of the first driver circuit 241 for displaying. When another image is also displayed, the display conversion operation is carried out according to the open/close operation of the second casing 214 in the same manner as described above.

In this manner, the power of a liquid crystal display device being displayed is turned off and the other liquid crystal display device is turned on for reading out image information from the memory and temporarily storing it on the memory part of the driver circuit to display. However, such display conversion operation to display is not followed properly when opening/closing of the second casing is carried out quickly. That is, a liquid crystal display screen remains even after the casing is opened.

In a portable telephone device having a plurality of liquid crystal display devices such as a conventional fold-up type of portable telephone device and the like, a plurality of liquid crystal display devices are respective independent liquid crystal display devices. In view of this, driver circuits are installed on the respective liquid crystal display devices, and each of liquid crystal display parts and each of driver circuits have to be wired therebetween. When a liquid crystal display device is driven and an image signal is sent, noise occurs and influences on radio communications of the wireless part 220. Thus, it needs to take actions against noise such as covering each of driver circuits with a shield plate or the like. In order to completely shield those circuits, at least a means to tightly adhere and fix the shield plate to its surrounding is needed. Such shield parts occupy a predetermined space in the portable telephone device, thus increasing weight of the portable telephone device and requiring a predetermined assembly process. As much as the number of liquid crystal display devices is increased, shielding parts are increased as well. In a portable telephone device having a plurality of liquid crystal display devices, there have been problems in handling with noise caused by the liquid crystal display devices and blocking the miniaturization, thinning, lightweightness, reduction of cost and improvement of assembly.

### DISCLOSURE OF THE INVENTION

A primary object of the present invention is to provide a liquid crystal display device and a portable telephone device using the liquid crystal display device in which problems are solved such that reduction of noise caused by the plurality of liquid crystal display devices, the miniaturization, thinning, lightweightness, reduction of cost and improvement of assembly are realized.

In addition, a secondary object of the present invention is to solve a problem that it takes some time for a display conversion between the first liquid crystal display device and the second liquid crystal display device, and the display conversion is not followed when the open/close operation of the casing is performed quickly.

Furthermore, a tertiary object of the present invention is to provide a portable telephone device in which the first liquid crystal display device and the second liquid crystal display device are displayed at the same time so as to display monitor images of a portable telephone device with a camera that has recently come into wide use on the first liquid crystal display device and the second liquid crystal display device at the same time.

In the portable telephone device of the present invention, a plurality of liquid crystal display parts are integrally connected to a flexible substrate, whereby said plurality of liquid crystal display parts are driven by a common driver circuit. In this manner, the number of diver circuits is reduced by using a driver circuit in common and wiring connected to the driver circuit is decreased. Therefore, noise caused by using a plurality of liquid crystal display devices can be reduced. Thus, miniaturization, thinning, lightweightness, reduction of cost and improvement of assembly for a portable telephone device are realized.

Also, in the portable telephone device of the present invention, a plurality of liquid crystal display parts are configured of any two or more different liquid crystal display parts of an all-transmissive liquid crystal display part, a semi-transmissive liquid crystal display part or an all-reflective liquid crystal display part and are integrally connected to a flexible substrate, whereby said plurality of liquid crystal display parts are driven by a single driver circuit. Accordingly, liquid crystal display devices involving different production processes can be integrated into a single liquid crystal display device.

Furthermore, in the portable telephone device of the present invention, a plurality of liquid crystal display parts are integrally connected to a flexible substrate, whereby a single liquid crystal display part of said plurality of liquid crystal display parts is selected and driven by a single driver circuit. By arranging a driver circuit to be used in common, image information is stored on the memory part of the driver circuit, and a liquid crystal display part to display images is converted simply by converting at the display conversion part in the driver circuit whether to display it on a first liquid crystal display part or whether to display it on the other liquid crystal display part. By using this, even when the opening/closing operation of the casing is performed quickly, the display conversion can be followed.

Moreover, the portable telephone device of the present invention adopts a configuration that a plurality of liquid crystal display parts are integrally connected to a flexible substrate, whereby two or more liquid crystal display parts of said plurality of liquid crystal display parts are driven by a common driver circuit at the same time. Accordingly, conversion can be accomplished by the display conversion part of the driver circuit can convert such that the first liquid crystal display part and the other liquid crystal display part are displayed at the same time. For example, when taking a picture by a portable telephone device with a camera, both one who takes a picture and one who is taken a picture are able to see a monitor image at the same time and an image of a picture that is already filmed can be seen from both sides of the portable telephone device.

Also, in the portable telephone device of the present invention, when a set of liquid crystal display parts are installed on a bent flexible substrate, a back light is inserted therebetween so that the back light can be used in common. In this manner, a back light can be used in common by a set of liquid crystal display parts.

In addition, in the portable telephone device of the present invention, a plurality of liquid crystal display parts are integrally connected to a flexible substrate, whereby said plurality of liquid crystal display parts are driven by a common driver circuit and the display is converted between said plurality of liquid crystal display parts. In this manner, a plurality of display parts to be driven by a driver circuit can be displayed selectively one by one or at the same time.

Furthermore, in the portable telephone device of the present invention, by further using a holder for installing a plurality of liquid crystal display parts and by installing a first liquid crystal display part and the other liquid crystal display part on the front and back sides of the holder respectively, liquid crystal display parts are installed on both the front and back sides of the holder. Accordingly, liquid crystal display devices of a unit type can be simply assembled just by installing liquid crystal display parts on both the front and back sides of the holder.

Further, in the liquid crystal display device of the present invention, when said plurality of liquid crystal display parts are installed on a bent flexible substrate by means of the holder, a back light is inserted and installed between at least one of said plurality of liquid crystal display parts and the holder. In this manner, a liquid crystal display device with an integrated back light can be simply assembled.

Further, in the liquid crystal display device of the present invention, a hole for transmitting a light from the back light is provided on the holder for installing said plurality of liquid crystal display parts, whereby the plurality of liquid crystal display parts installed on the front and back sides of the holder can be irradiated with a light from the back light respectively. Due to this, a liquid crystal display device using a back light in common in a plurality of liquid crystal display parts is realized.

Further, the present invention employs a liquid crystal display device in which a common driver circuit drives the plurality liquid crystal display parts by integrally connecting the plurality of liquid crystal display parts to a flexible substrate. In this manner, a portable telephone device is realized, in which noise caused by using a plurality of liquid crystal display devices is reduced and the miniaturization, thinning, lightweightness and improvement of assembly are achieved.

Further, the present invention relates to a fold-up type of portable telephone device such as an open/close type for opening and closing the second casing to the first casing, a slide type for sliding or a slide rotating type for rotating in the horizontal direction, and relates to a portable telephone device in which the top and bottom of an image on the first liquid crystal display part or the second liquid crystal display part is converted according to a relative position of the second casing to the first casing. Due to this, even when the second casing is folded or opened, an easy-to-see display can be viewed.

In particular, by disposing the first liquid crystal display part and the second liquid crystal display part on the front and back sides of the second casing, the top and bottom of an image is converted such that the top and bottom can be viewed the same from anywhere at the front or back sides of the second casing when the image is displayed at the same time, thus displaying an easy-to-see image.

### BRIEF DESCRIPTION OF THE DRAWINGS

Fig. 1 is a schematic sectional view of a portable telephone device in a first embodiment of the present invention;
Fig. 2 is a schematic block diagram of a portable telephone device in a first embodiment of the present invention;
Fig. 3 is a developed view of a liquid crystal display device in use for a portable telephone device in a first embodiment of the present invention;
Fig. 4 is a plane view of a liquid crystal display unit in use for a portable telephone device in a first embodiment of the present invention;
Fig. 5 is a view illustrating an appearance when a portable telephone device is closed in a first embodiment of the present invention;
Fig. 6 is a view illustrating an appearance when a portable telephone device is opened in a first embodiment of the present invention;
Fig. 7 is flow chart for controlling the display conversion in a first embodiment of the present invention;
Fig. 8 is a schematic view illustrating the status of using a portable telephone device in a second embodiment of the present invention;
Fig. 9 is a view illustrating an appearance of a portable telephone device in a second embodiment of the present invention;
Fig. 10 is a view illustrating an appearance of a portable telephone device in a second embodiment of the present invention;
Fig. 11 is a view illustrating an appearance of a portable telephone device in a third embodiment of the present invention;
Fig. 12 is a view illustrating an appearance of a portable telephone device in a third embodiment of the present invention;
Fig. 13 is a view illustrating an appearance of a portable telephone device in a third embodiment of the present invention;
Fig. 14 is a view illustrating an appearance of a portable telephone device in a third embodiment of the present invention;
Fig. 15 is a schematic view illustrating the status of using a portable telephone device in a third embodiment of the present invention;
Fig. 16 is a schematic sectional view of a portable telephone device in a fourth embodiment of the present invention;
Fig. 17 is a schematic sectional view of a portable telephone device in a fifth embodiment of the present invention;
Fig. 18 is a schematic sectional view of a portable telephone device in a sixth embodiment of the present invention;
Fig. 19 is a schematic sectional view of a conventional fold-up type of portable telephone device; and
Fig. 20 is a schematic block diagram of a conventional fold-up type of portable telephone device.

### BEST MODE FOR CARRYING OUT THE INVENTION

Embodiments of the present invention are explained hereinafter with reference to the drawings.

### Embodiment 1

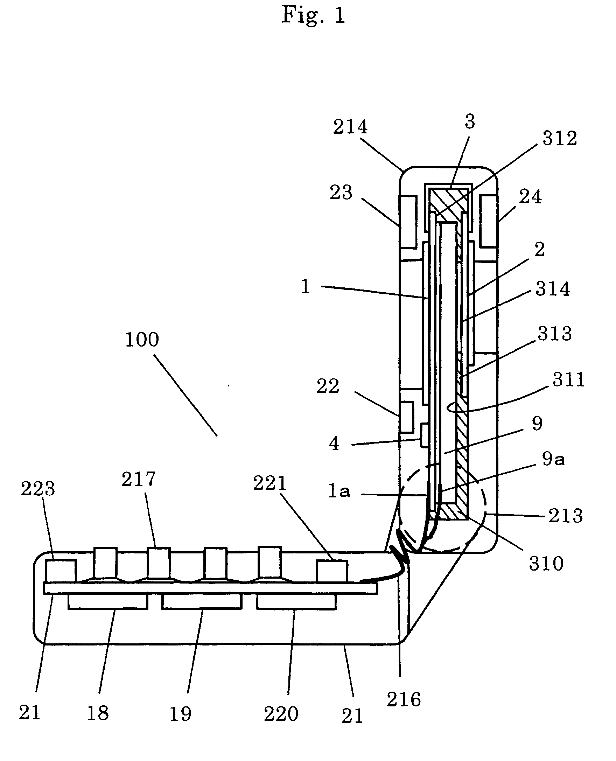

Fig. 1 illustrates a schematic sectional view of a portable telephone device according to a first embodiment of the present invention. Incidentally, in a configuration of the portable telephone device 100 of the present invention as illustrated in Fig. 1, many parts including a first casing 212 and a second casing 214 are the same as the prior art described before so that the same reference numbers are given to the same parts without further explanation.

In Fig. 1, a back light 9 is inserted into a first concave 311 of a holder 310 on which a plurality of liquid crystal display parts are formed, while a first liquid crystal display part 1 is inserted into a second concave 312 of the holder 310 located on the top of the back light 9. A driver circuit 4 is located on the first liquid crystal display part 1, one end of the first liquid crystal display part 1 is connected to a flexible connection substrate 3, and the front end of the flexible connection substrate 3 is connected to a second liquid crystal display part 2. The second liquid crystal display part 2 is extendably connected to the first liquid crystal display part 1 via the flexible connection substrate 3. Both of the first liquid crystal display part 1 and the second liquid crystal display part 2 are driven by the driver circuit 4. The flexible connection substrate 3 is bent in substantially U-shape or as described in Fig.1 directed from the side of the first liquid crystal display part of the holder 310 to the side of the second liquid crystal display part, and the second liquid crystal display part 2 connected to the front of the flexible connection substrate 3 is inserted into the third concave 313 of the holder 310. Incidentally, a hole 314 on the holder 310 corresponding to the size of the second liquid crystal display part 2 is formed so as to allow transmission of a light from the back light 9 toward the second liquid crystal display part 2. An end portion 1a of the first liquid crystal display part 1 and an end portion 9a of the back light 9 are connected to a flexible control substrate 216 respectively in which its front end is branched. The flexible control substrate 216 is connected to a main substrate 215 of the first casing 212.

In this manner, the portable telephone device 100 of the present invention adopts a configuration for assembling the liquid crystal display device in the second casing 214 as a single liquid crystal display unit by inserting the back light 9 into the first concave 311 of the holder 310, by inserting the first liquid crystal display part 1 into the second concave 312 of the holder 310, and by inserting the second liquid crystal display part 2 being integrally connected to the flexible connection substrate 3 to which the first liquid crystal display part 1 is connected into a third concave 313 of the holder 310 respectively.

Incidentally, cameras 23 and 24, which are not attached in the prior art, are connected to the side of the first liquid crystal display part and the side of the second liquid crystal display part respectively in the second casing 214.

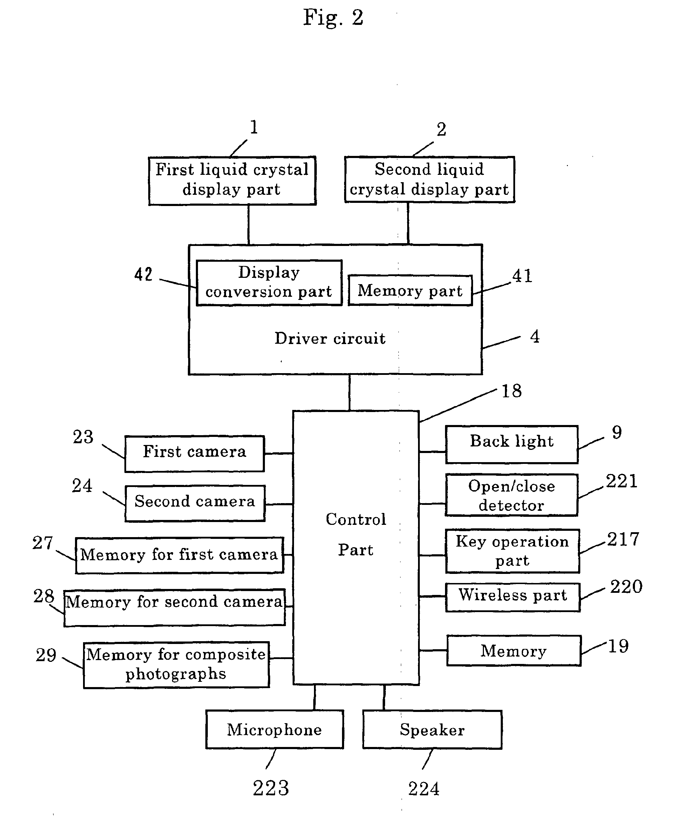

Fig. 2 illustrates a schematic block diagram of the portable telephone device 100 according to the first embodiment of the present invention. In Fig. 2, many parts are also the same as the prior art described before so that the same reference numbers are given to the same parts without further explanation.

As shown in Fig. 2, according to the present invention, the first liquid crystal display part 1 and the second liquid crystal display part 2 are driven by the single driver circuit 4. There is installed a display conversion part 42 on the driver circuit 4 in addition to a memory part 41. The display conversion part 42 serves to convert whether to display image information on the first liquid crystal display part 1, whether to display it on the second liquid crystal display part 2 or whether to display it on both of the first liquid crystal display part 1 and the second liquid crystal display part 2 at the same time. Such image information was read out from the memory 19 of the main substrate and stored on the memory part 41 by a control part 18.

In addition to the above, the first camera 23 and the second camera 24 are connected to the control part 18. And the control part 18 controls a photographing operation of the cameras by an operational signal to be inputted from a key operation part 217. Image information that is photographed by the first camera 23 and the second camera 24 is stored on a memory 27 for the first camera and a memory 28 for the second camera respectively. Such image information can be read out. The control part 18 not only controls the photographing operation of the first camera 23 and the second camera 24, but also prepares image information on composite photographs in combination with image information stored on the memory 27 for the first camera and the memory 28 for the second camera for storing it on a memory 29 for composite photographs. Such image information can be read out. Incidentally, the memory 19 also stores telephone directory information in conjunction with the telephone number and facial picture of a person on the telephone directory as telephone directory information.

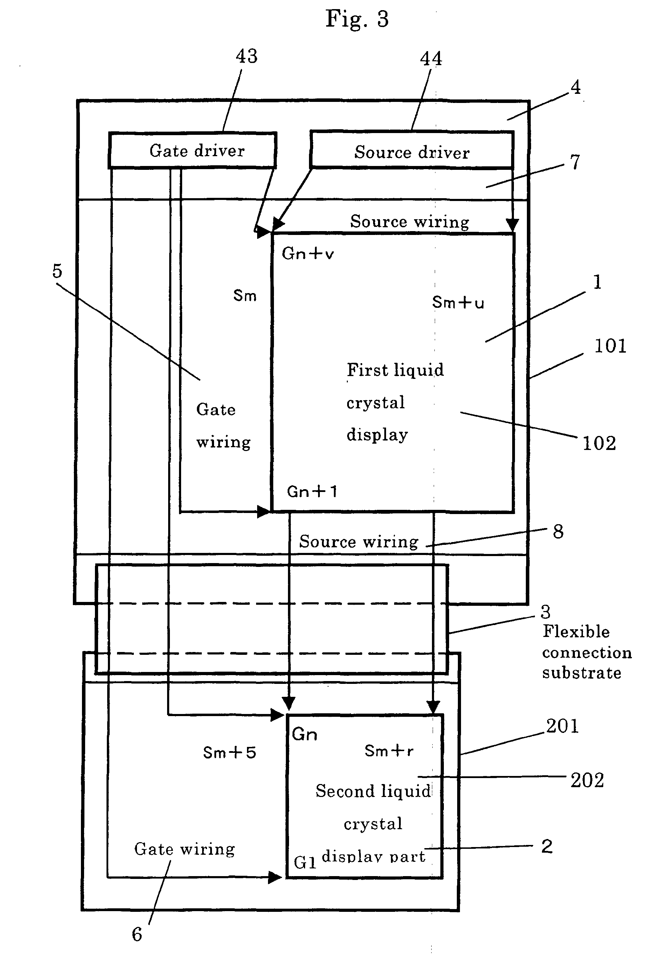

Fig. 3 illustrates a developed view of a liquid crystal display device in use for a portable telephone device according to the present invention. The first liquid crystal display part 1 has liquid crystal on a lower glass substrate 101, though not illustrated, which is enclosed between an upper glass substrate 102 and the lower glass substrate 101. The driver circuit 4 configuring of a gate driver 43 and a source driver 44 is mounted on one end of the lower glass substrate 101. The flexible connection substrate 3 is connected to the other end of the lower glass substrate 101 and a lower glass substrate 201 of the second liquid crystal display part 2 is connected to the flexible connection substrate 3. Liquid crystal on the lower glass substrate 201 of the second liquid crystal display part 2, though not illustrated, is enclosed between an upper glass substrate 202 of the second liquid crystal display part 2 and the lower glass substrate 201.

The flexible connection substrate 3 can be bent. It is bent 180 degrees so that, as already illustrated in Fig. 1, the first liquid crystal display part 1 and the second liquid crystal display part 2 are encased into the second casing 214, facing each other on the back side.

From the gate driver 43 of the driver circuit 4, gate wirings 5 and 6 are connected to the first liquid crystal display part 1 and the second liquid crystal display part 2 respectively, while from the source driver 44, source wirings 7 and 8 are connected to the first liquid crystal display part 1 and the second liquid crystal display part 2 respectively.

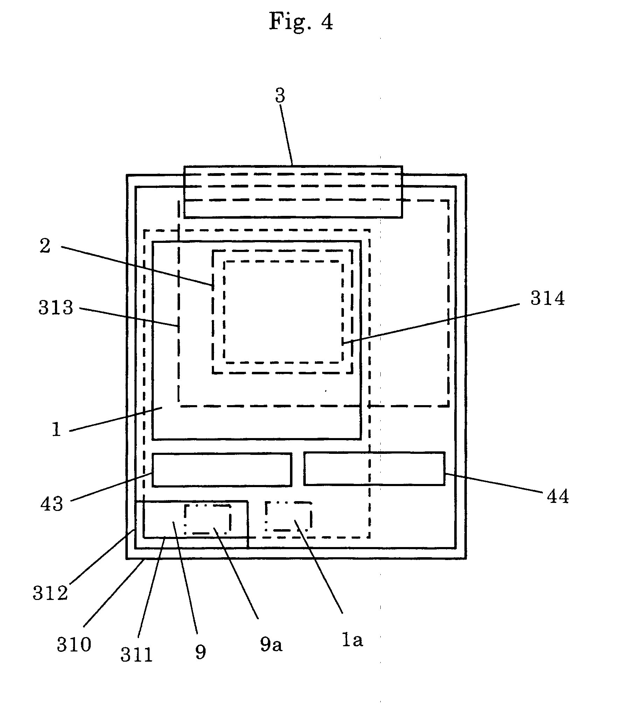

Fig. 4 illustrates a top plan view when the liquid crystal display devices are assembled as a single liquid crystal display unit by inserting the back light 9 into the first concave 311, by inserting the first liquid crystal display part 1 into the second concave 312, and by inserting the second liquid crystal display part 2 being integrally connected to the flexible connection substrate 3 to which the first liquid crystal display part 1 is connected into a third concave 313 respectively, which are used for the portable telephone device according to the present invention. Incidentally, an assembly approach and a sectional view are already illustrated in Fig. 1 so that further explanation will be omitted.

As described above, the number of driver circuits is reduced and wiring connected to the driver circuit is decreased. Therefore, noise caused by using a plurality of liquid crystal display devices can be reduced.

Furthermore, by reducing the number of driver circuits, noise preventing parts such as shield members or the like and fittings to be performed on the driver circuits are reduced as well, and the miniaturization, thinning, lightweightness and reduction of cost, improvement of assembly for the portable telephone device are realized. In particular, by a configuration of inserting a plurality of liquid crystal display parts and the back light into the holder, assembly can be greatly improved.

Incidentally, it is possible to have a configuration of combining two or more different liquid crystal display parts of an all-transmissive liquid crystal display part, a semi-transmissive liquid crystal display part, or an all-reflective liquid crystal display part and integrally connecting them to the flexible substrate for enabling a single driver circuit to drive a plurality of liquid crystal display parts. The first liquid crystal display part 1 may be configured of an all-transmissive liquid crystal display device, the second liquid crystal display part 2 may be configured of a semi-transmissive liquid crystal display device, or both of the first liquid crystal display part 1 and the second liquid crystal display part 2 may be configured of all-transmissive liquid crystal display devices. In particular, when both are composed of all-transmissive liquid crystal display devices, the back light 9 can be shared therebetween.

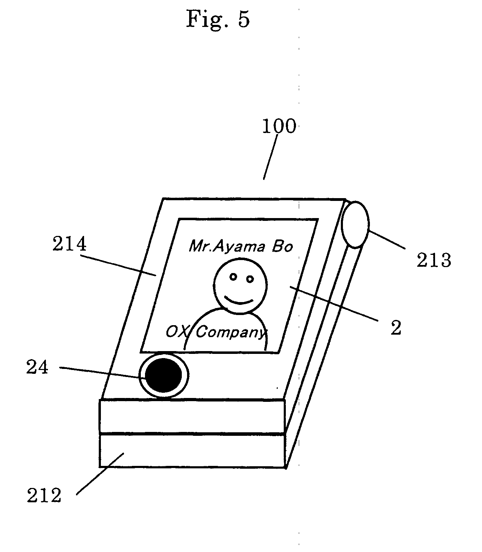

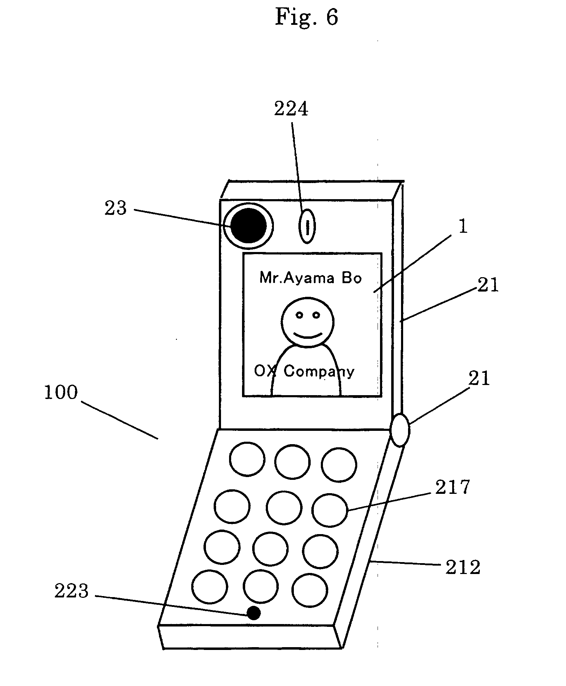

Figs. 5 and 6 are views illustrating an appearance of the portable telephone device 100 according to the present invention. Fig. 5 is a view illustrating an appearance at a state that the second casing 214 is closed to the first casing 212, while Fig. 6 is a view illustrating an appearance at a state that the second casing 214 is opened.

When there is incoming a call at a state that the casing is closed as shown in Fig. 5, the control part 18 compares the telephone number just received from a caller with the already registered telephone numbers in a telephone directory stored on the memory 19. When there is found a matched number, image information of a name and facial picture of a caller stored in connection with the matched telephone number is read out and displayed on the second liquid crystal display part 2. Incidentally, when the second casing 214 is opened upon receiving a call, conversion is carried out such that, as shown in Fig. 6, the same image is continuously displayed on the first liquid crystal display part 1. In the present invention, the first liquid crystal display part 1 and the second liquid crystal display part 2 are driven by the single driver circuit 4, and image information of a name and facial picture of a caller is temporarily stored on the memory part 41 of the driver circuit 4. Therefore, the display conversion part 42 may simply convert whether to display image information of the memory part 41 on the first liquid crystal display part 1 or on the second liquid crystal display part 2 when the open/close operation of the second casing 214 is detected. For this reason, display conversion can be rapidly responded and the display can be quickly followed according to the open/close operation. As a result of that, there never happen problems as in the prior art that the display is disappeared while opening and closing the casing, and a screen is displayed after a while.

Incidentally, an example of displaying the same image is shown in Figs. 5 and 6. When the size of the first liquid crystal display part 1 is larger than that of the second liquid crystal display part 2, however, image information stored on the memory part 41 of the driver circuit is image information that can be displayed on the first liquid crystal display part 1. Therefore, display-enabled image information clipped from image information displayed on the first liquid crystal display part 1 is only displayed on the second liquid crystal display part 2. For example, a name, facial picture and company name of a caller are displayed on the first liquid crystal display part 1, while only a name and facial picture of a caller are displayed on the second liquid crystal display part 2 in which the display range is smaller than the first liquid crystal display part 1, excluding a company name. In this manner, when there is incoming a call, a name and facial picture are shown on the second liquid crystal display part 2, while more detailed information including a company name and the like to be displayed on the first liquid crystal display part 1 is shown for more exact recognition of a caller by opening the second casing 214.

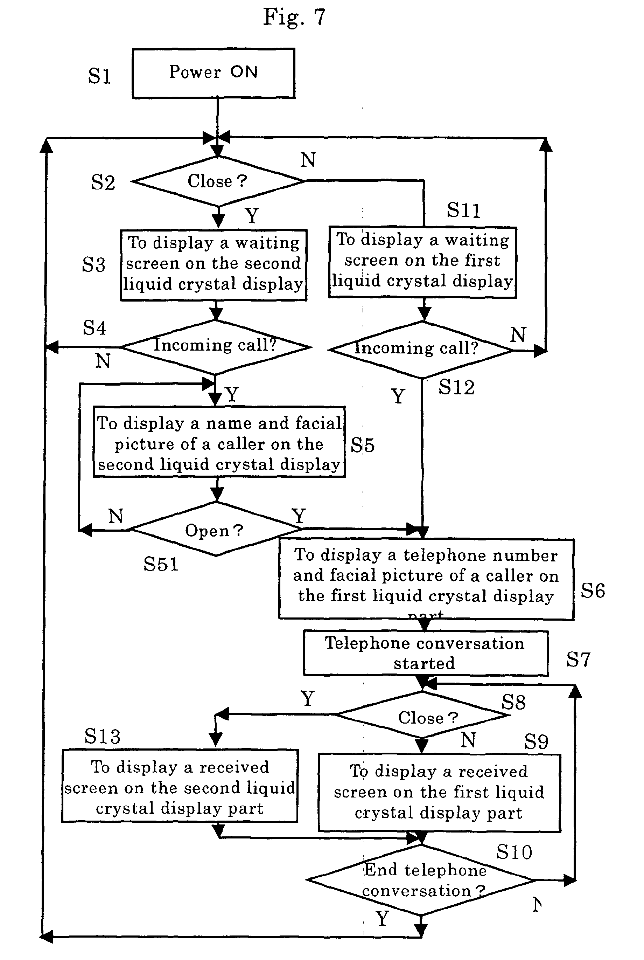

Fig. 7 illustrates a flow chart showing a control sequence of display conversion when the casing is opened or closed upon incoming a call.

In Fig. 7, when the key operation part 217 of the portable telephone device 100 of the present invention is operated and the power is turned on (step S1), the control part 18 confirms the open/close status by the open/close detector 221 (step S2). When the second casing 214 is closed, a waiting screen is displayed on the second liquid crystal display part 2 (step S3). Then, an incoming call is waited (step S4).

When there is incoming a call, the control part 18 compares the telephone number just received from a caller with a telephone directory data on the memory 19. When there is found a matched number, the appropriate registered name and facial picture are displayed (step S5). When the user of the portable telephone device 100 sees a facial picture displayed on the second liquid crystal display part 2 and opens the second casing 214 for telephone conversation (step S51), the name and facial picture of a caller displayed on the second liquid crystal display part 2 thus far are displayed on the first liquid crystal display part 1 (step S6). The user presses the hook button to initiate the conversation (step S7).

When the second casing 214 remains opened as it is (step S8), an image received from a caller by the next generation communication system (W-CDMA) and the like is displayed on the first liquid crystal display part 1 (step S9).

After the conversation is started, when closing the second casing 214 to use an earphone microphone, an image received from the calling party is displayed on the second liquid crystal display part 2 (step S13).

When the call is terminated (step S10), the open/close detector 221 confirms the open/close status of the casing (step S2). When the second casing 214 is closed, a waiting screen is displayed on the second liquid crystal display part 2 (step S3). Then, an incoming call is waited in the procedure as described above (step S4). When the second casing 214 is not closed, a waiting screen is displayed on the first liquid crystal display part 1 (step S11) for waiting for an incoming call (step S12). In this manner, the display is converted between the first liquid crystal display part 1 and the second liquid crystal display part 2.

In a conventional fold-up type of portable telephone device that has come into commercial use, a screen of the second liquid crystal display part 2 is small and it is difficult to confirm caller information. However, if the screen is about the size that a camera monitor can operate, an image about the size of a facial picture of a caller can be displayed upon receipt of a call. The called party can confirm the caller by viewing the facial picture on the second liquid crystal display part 2 and he/she can engage in conversation with the caller while viewing caller information in addition to the facial picture displayed on the first liquid crystal display part 1 by opening the second casing 214.

### Embodiment 2

A portable telephone device according to a second embodiment of the present invention is explained below.

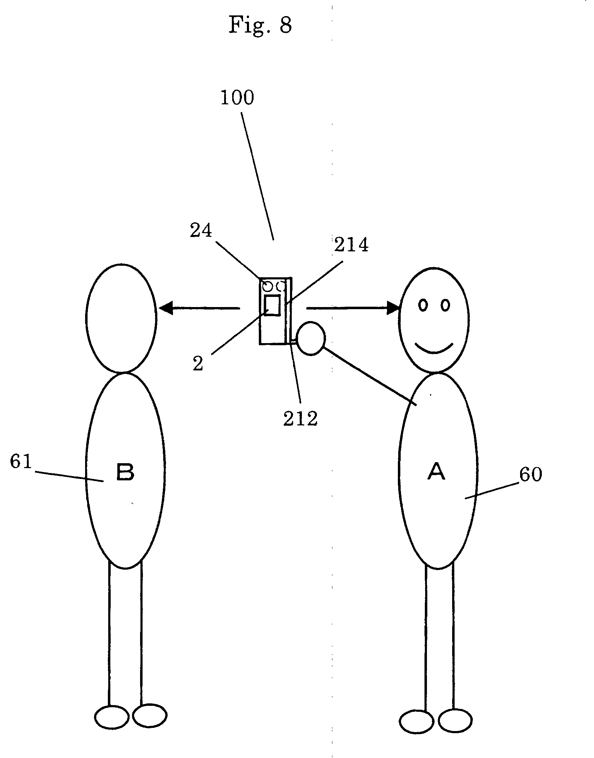

Fig. 8 is a view illustrating a situation in which Mr. A 60 is trying to photograph a face of Mr. B 61 using a second camera 24 in a portable telephone device 100 according to a second embodiment of the present invention. Mr. A 60 holds a first casing 212 in the portable telephone device 100 in hand and opens a second casing 214 for orienting the camera 24 to Mr. B 61. At this time, the portable telephone device 100 directly displays an image obtained by the second camera 24 in both directions to the first liquid crystal display part 1 and the second liquid crystal display part 2 by means of a display conversion part 42 of a driver circuit 4. Incidentally, to erect the second casing 24 and see the first liquid crystal display part 1 and the second liquid crystal display part 2 on the front and back sides of the second casing 214 means that the top and bottom of an image on the second liquid crystal display part 2 must be opposite to the aforementioned first embodiment. Therefore, in the second embodiment of the present invention, when an image signal is outputted to the second liquid crystal display part 2 from the driver circuit 4, the output procedure is carried out in the reversed order so that the top and bottom-reversed screen is displayed.

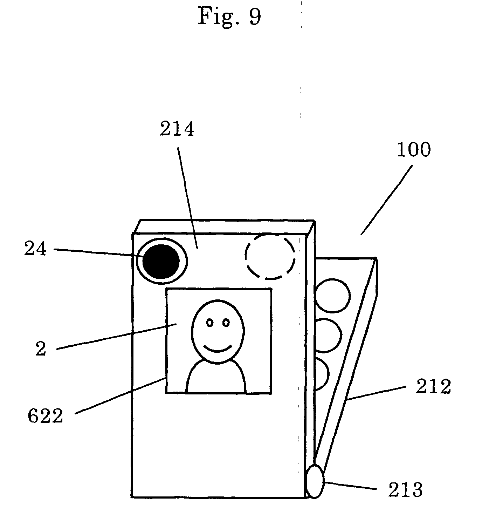

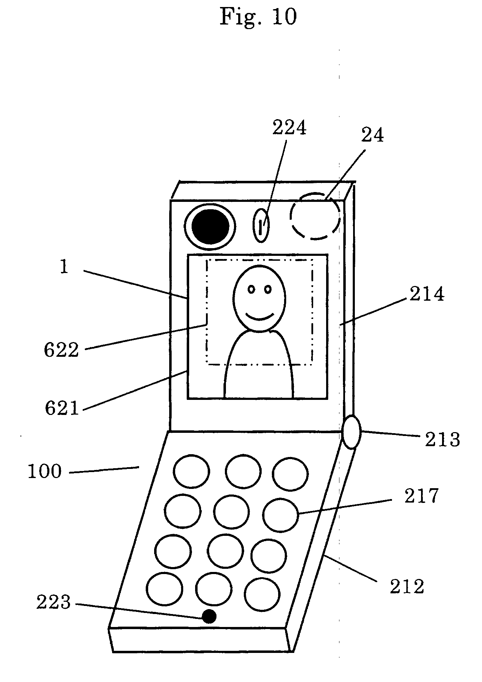

Figs. 9 and 10 illustrate an appearance of a portable telephone device according to the second embodiment of the present invention. Fig. 9 is a view illustrating an appearance for showing the second liquid crystal display part 2, while Fig. 10 is a view illustrating an appearance for showing the first liquid crystal display part 1. In the second embodiment of the present invention, as the size of the second liquid crystal display part 2 is smaller than that of the first liquid crystal display part 1, a portion of a display area 621 to be displayed on the first liquid crystal display part 1 is displayed on the second liquid crystal display part 2 as if only image information in a frame indicated by a two-dot chain line of a display area 622 is clipped.

In this manner, as a monitor screen of the second camera 24 is displayed on the first liquid crystal display part 1 and the second liquid crystal display part 2 at the same time, not only Mr. A 60 who takes a picture can see the monitor screen, but also Mr. B 61 who is taken a picture can see the monitor screen at the same time. Thus, Mr. B 61 who is taken a picture can make sure how he/she is taken by the camera 24.

### Embodiment 3

A portable telephone device according to a third embodiment of the present invention is explained below. In the present invention, as already described in Fig. 1, the first camera 23 and the second camera 24 are mounted on the front and back sides of the second casing 214, and the control part 18 is given a function of combining image information photographed from the first camera 23 and image information photographed from the second camera 24.

In this manner, image information of Mr. A 60 photographed from the first camera 23 and image information of Mr. B 61 photographed from the second camera 24 can be displayed as combined on a single screen.

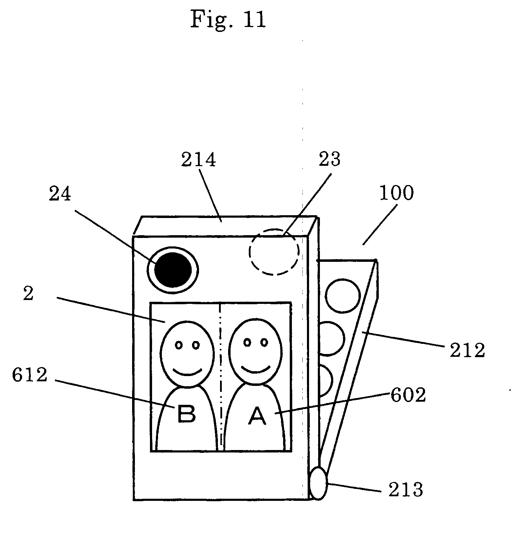

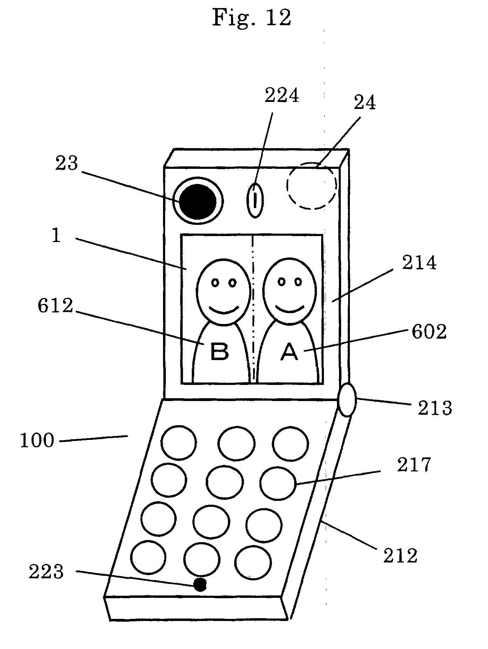

Figs. 11 and 12 are views illustrating an appearance of the portable telephone device of the present invention when a monitor image 602 of Mr. A 60 on a monitor at the first camera 23 and a monitor image 612 of Mr. B 61 on a monitor at the second camera 24 are displayed as combined on a single screen. Fig. 11 is a view illustrating an appearance for showing the second liquid crystal display part 2, in which the monitor image 602 of Mr. A occupying the right half of the second liquid crystal display part 2 and the monitor image 612 of Mr. B occupying the left half are displayed. Fig. 12 is a view illustrating an appearance for showing the first liquid crystal display part 1, in which the monitor image 602 of Mr. A occupying the right half of the first liquid crystal display part 1 and the monitor image 612 of Mr. B occupying the left half are displayed. In this manner, by viewing both of Mr. A and Mr. B as combined into the monitor screen at the same time, to timely take a picture of two persons side by side can be simply made.

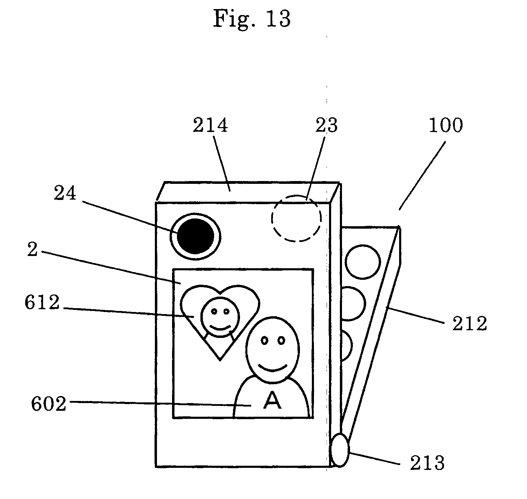

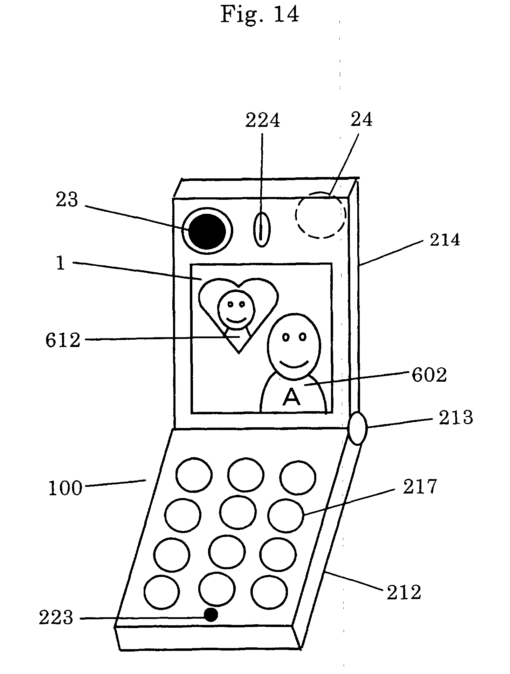

Incidentally, Fig. 13 and 14 are views illustrating an appearance of a portable telephone device of the present invention when image information of one side and an image in a frame in a predetermined shape at a predetermined position are displayed as combined. Fig. 13 is a view illustrating an appearance for showing the second liquid crystal display part 2, while Fig. 14 is a view illustrating an appearance for showing the first liquid crystal display part 1. In Figs. 13 and 14, a monitor image 612 of Mr. B is combined such that it is inserted into a heart shape frame.

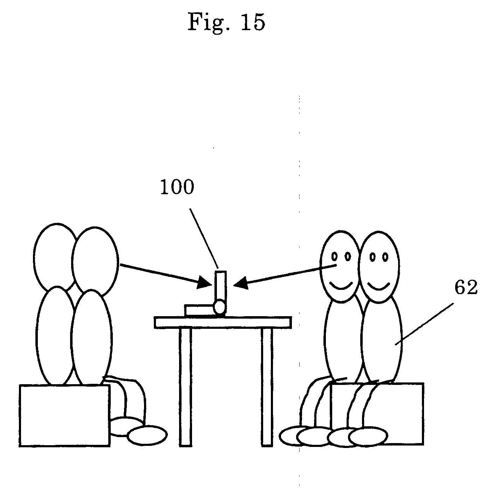

Incidentally, in the explanation of the aforementioned embodiment, an image is displayed on the first liquid crystal display part 1 and the second liquid crystal display part 2 at the same time, which is referred to as a monitor image. However, an image already photographed from the camera may be displayed on the first liquid crystal display part 1 and the second liquid crystal display part 2 at the same time. For example, as shown in Fig. 15, a plurality of people 62 can see an image photographed from the camera at both sides of the portable telephone device 100 across a table.

A function to display the same image on the first liquid crystal display part 1 and the second liquid crystal display part 2 at the same time has an effect such that, even in a portable telephone device without a camera, a photographic image received via mail, received mail, textual information including news, weather forecast or the like received from the internet network in the i-mode or the like, and other images are displayed on the first liquid crystal display part 1 and the second liquid crystal display part 2 at the same time, thus enabling a plurality of people to view the same image at the same time.

### Embodiment 4

A portable telephone device according to a fourth embodiment of the present invention is explained below. In the portable telephone device of the present invention, a fold-up type of portable telephone device is exemplified in from the first embodiment to the third embodiment. However, the present invention can be applied to other portable telephone devices in addition to a fold-up type of portable telephone device as far as such portable telephone devices are provided with a plurality of liquid crystal display parts.

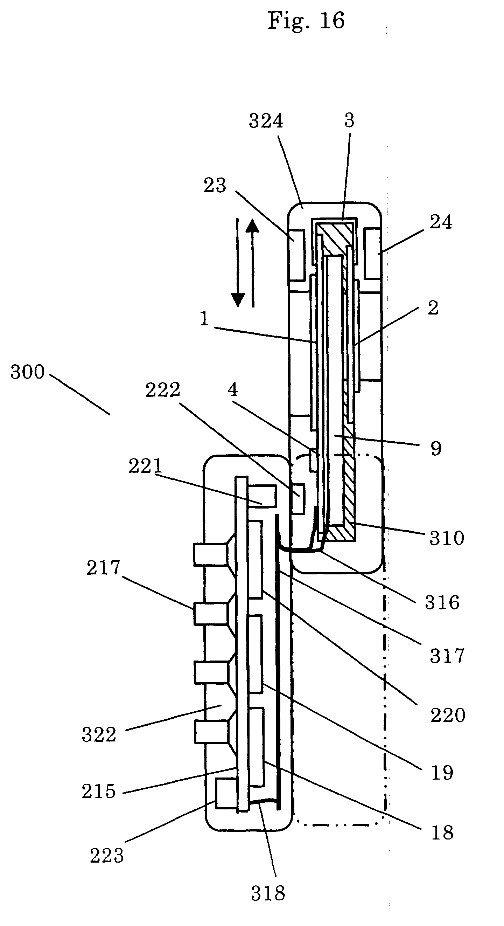

In Fig. 16, the present invention is applied to an example of a so-called slide type of portable telephone device 300 in which a second casing 324 having a first liquid crystal display part 1 and a second liquid crystal display part 2 on the front and back sides thereof is sliding against a first casing 322. The second casing 324 is sliding against the first casing 322 as indicated by arrows in the upward and downward directions. In the second casing 324, the first liquid crystal display part 1 and the second liquid crystal display part 2 are mounted on the front and back sides of a holder 310, a back light 9 is put in between the first liquid crystal display part 1 and the second liquid crystal display part 2, and the first liquid crystal display part 1 and the second liquid crystal display part 2 are connected to a flexible connection substrate 3,which are driven by a driver circuit 4 on the side of the first liquid crystal display part 1. This configuration is the same as that already described in the first embodiment in Fig. 1.

The first liquid crystal display part 1 and the back light 9 are connected to a slide contact 316. A fixed contact 317 is provided on the first casing 322 and the fixed contact 317 is connected to a main substrate 215 by means of a wire 318. The slide contact 316 has spring properties and is sliding freely against the fixed contact 317 at a state of being contacted to it with a predetermined pressure. By a magnet 222 and an open/close detector 221, the sliding status of the second casing 324 is detected to perform display conversion whether to display on the first liquid crystal display part 1, on the second liquid crystal display part 2 or on both of the liquid crystal display parts.

The slide type of portable telephone device according to the present invention, in the same that the present invention is applied to a fold-up type of portable telephone device, can also reduce the number of driver circuits, reduce wiring to the driver circuit and reduce noise caused by using a plurality of liquid crystal display devices. Thus, the miniaturization, thinning, lightweightness and reduction of cost can be realized and assembly can also be improved. Furthermore, an image stored on the memory part of a single driver circuit can be converted between the first liquid crystal display part 1 and the other liquid crystal display part with a good tracing ability by a display conversion part according to an open/close operation. Also, the present invention can obtain an effect that the same image can be displayed on the first liquid crystal display part 1 and the second liquid crystal display part 2 at the same time.

### Embodiment 5

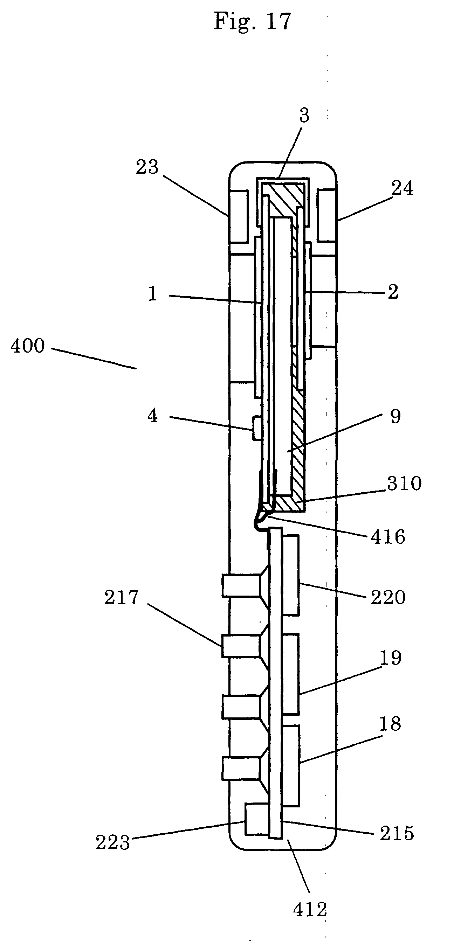

A portable telephone device according to a fifth embodiment of the present invention is explained below. In Fig. 17, the present invention is applied to an example of a so-called straight type of portable telephone device 400. In a casing 412, a first liquid crystal display part 1 and a second liquid crystal display part 2 are mounted on the front and back sides of a holder 310, a back light 9 is put in between the first liquid crystal display part 1 and the second liquid crystal display part 2, and the first liquid crystal display part 1 and the second liquid crystal display part 2 are connected to a flexible connection substrate 3,which are driven by a driver circuit 4 on the side of the first liquid crystal display part 1. This configuration is the same as that already described in the first embodiment in Fig. 1 and the fourth embodiment in Fig. 16.

In Fig. 17, as a casing is integrally formed, an open/close detector as described in other embodiments of the present invention is not provided. The display on the first liquid crystal display part 1 and the second liquid crystal display part 2 is converted by a display conversion part 42 of the driver circuit 4 according to an input operation from a key operation part 217 by an operator. In the straight type of portable telephone device 102 according to the present invention, the same effect can be obtained when the present invention is applied to the aforementioned fold-up type of portable telephone device 100 or the slide type of portable telephone device 300.

As described above, according to the present invention, in a portable telephone device equipped with a plurality of liquid crystal display parts, the number of driver circuits can be reduced, and wiring to the driver circuit can be reduced so that noise caused by using a plurality of liquid crystal display devices can be decreased. Thus, the miniaturization, thinning, lightweightness and reduction of cost can be realized and assembly can also be improved.

Furthermore, an image stored on the memory part of a single driver circuit can be converted between the first liquid crystal display part 1 and the other liquid crystal display part with a good tracing ability by a display conversion part.

Also, as the same image can be displayed on the first liquid crystal display part 1 and the second liquid crystal display part 2 at the same time, in a portable telephone device with a camera, both one who takes a picture and one who is taken a picture can confirm a monitor. In addition, in case of other images, a plurality of people can view the same image on the first liquid crystal display part 1 and the second liquid crystal display part 2 at the same time.

Furthermore, a back light can be used in common by inserting the back light when a portion of a flexible substrate is bent.

### Embodiment 6

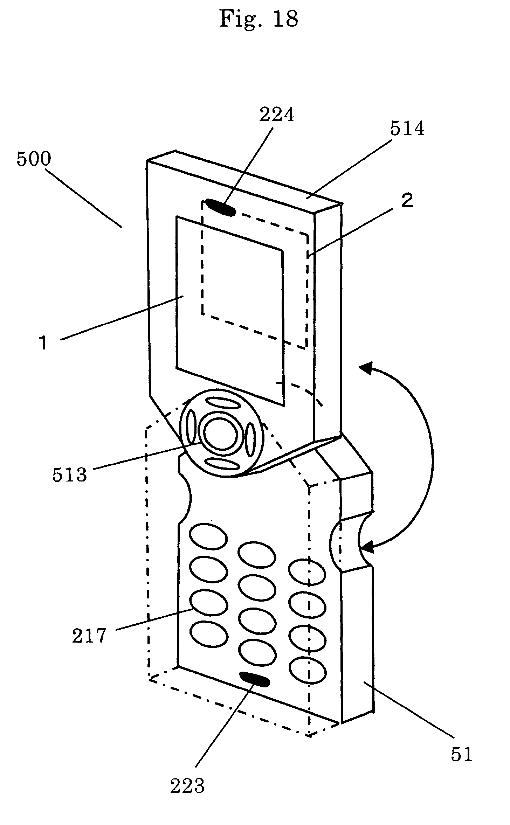

A portable telephone device according to a sixth embodiment of the present invention is explained below. In Fig. 18, the present invention is applied to an example of a so-called slide rotating type of portable telephone device 500, in which a rotation axis 513 is installed on a plane of a first casing 512, a second casing 514 is slide rotating against the rotation axis 513 for folding or extending. There are mounted on the second casing 514 a first liquid crystal display part 1 and the second liquid crystal display part 2. As a configuration of integrating the first liquid crystal display part 1 and the second liquid crystal display part 2 into a single body is the same as already described in the first embodiment, no further explanation will be given.

In a slide rotating type of portable telephone device 500 in Fig. 18, a rotation angle of the second casing 514 to the first casing 512 is detected and the display conversion is performed between the first liquid crystal display part 1 and the second liquid crystal display part 2. When the second casing 514 is closed, the second liquid crystal display part 2 is hidden in the first casing 512, without displaying on the second liquid crystal display part 2. As for the top and bottom of an image to be displayed on the first liquid crystal display part 1, the top of an image is near the rotation axis 513 and the bottom is far from the rotation axis 513.

Then, when rotated 90 degrees in the upward direction from a position where the second casing 514 is closed, sideways image is displayed on both of the first liquid crystal display part 1 and the second liquid crystal display part 2 or one of them. When rotated 180 degrees in the upward direction from a position where the second casing 514 is closed, an image in which the top and bottom are reversed is displayed on both of the first liquid crystal display part 1 and the second liquid crystal display part 2 or one of them even when closed. Even in a slide rotating type of portable telephone device 500 according to the present invention, as the first liquid crystal display part 1 and the second liquid crystal display part 2 are driven by a common driver circuit, the number of driver circuits can be reduced and wiring to the driver circuit can be decreased, thus reducing noise caused by using a plurality of liquid crystal display devices. Accordingly, the present invention can obtain such effects that the miniaturization, thinning, lightweightness and reduction of cost can be realized, assembly can also be improved, and an image can be easily seen as the display direction is converted depending on a relative position of the second casing 514 to the first casing 512.

### INDUSTRIAL APPLICABILITY

As described above, as driver circuits can be reduced, wiring to the driver circuit can be decreased and noise can be reduced, even when a plurality of liquid crystal display parts are installed, the present invention is suitable for use in a portable telephone device having a plurality of display parts, PDA (Personal Digital Assistance) and other electronic equipment.

## Claims

1. A portable telephone device wherein a plurality of liquid crystal display parts are integrally connected to a flexible substrate, whereby said plurality of liquid crystal display parts are driven by a common driver circuit.

2. The portable telephone device according to claim 1, wherein said plurality of liquid crystal display parts are configured of any two or more different liquid crystal display parts of an all-transmissive liquid crystal display part, a semi-transmissive liquid crystal display part or an all-reflective liquid crystal display part and are integrally connected to a flexible substrate, whereby said plurality of liquid crystal display parts are driven by a single driver circuit.

3. The portable telephone device according to claim 1, wherein said plurality of liquid crystal display parts are integrally connected to a flexible substrate, whereby a single liquid crystal display part of said plurality of liquid crystal display parts is selected and driven by a single driver circuit.

4. The portable telephone device according to claim 1, wherein said plurality of liquid crystal display parts are integrally connected to a flexible substrate, whereby two or more liquid crystal display parts of said plurality of liquid crystal display parts are driven by a common driver circuit at the same time.

5. The portable telephone device according to claim 1, wherein, when a set of liquid crystal display parts are installed on a bent flexible substrate, a back light is inserted therebetween so that the back light can be used in common.

6. A liquid crystal display device wherein a plurality of liquid crystal display parts are integrally connected to a flexible substrate, whereby said plurality of liquid crystal display parts are driven by a common driver circuit and the display is converted between said plurality of liquid crystal display parts.

7. The liquid crystal display device according to claim 6,wherein a plurality of liquid crystal display parts are integrally connected to a flexible substrate, whereby said plurality of liquid crystal display parts are driven by a common driver circuit and the display is converted between said plurality of liquid crystal display parts, and wherein a holder for installing a plurality of liquid crystal display parts is provided, a first liquid crystal display part and the other liquid crystal display part are installed on the front and back sides of the holder respectively, and the liquid crystal display device has liquid crystal display parts on its front and back sides.

8. The liquid crystal display device according to claim 7, wherein, when said plurality of liquid crystal display parts are installed on a bent flexible substrate by means of the holder, a back light is inserted and installed between at least one of said plurality of liquid crystal display parts and the holder.

9. The liquid crystal display device according to claim 8, wherein a hole for transmitting a light from the back light is provided on the holder for installing said plurality of liquid crystal display parts, whereby the plurality of liquid crystal display parts installed on the front and back sides of the holder can be irradiated with a light from the back light respectively.

10. A portable telephone device using any of liquid crystal display devices as described in any one of claims 6 to 9.

11. A fold-up type of portable telephone device including an open/close type, a slide type or a slide rotating type, using any of liquid crystal display devices as described in any one of claims 6 to 9, wherein the top and bottom of an image on a first liquid crystal display part or a second liquid crystal display part are converted depending on a relative position of a second casing to a first casing.

12. A fold-up type of portable telephone device including an open/close type, a slide type or a slide rotating type, using any of liquid crystal display devices as described in any one of claims 6 to 9, wherein, when a first liquid crystal display part and a second liquid crystal display part are displayed at the same time, the top and bottom of an image of the display are identical.
